# FASCICULE DE BREVET EUROPEEN

(11) **EP 2 253 535 B1**
(45) Date de publication et mention de la délivrance du brevet: **15.04.2015**
(21) Numéro de dépôt: 10004046.8
(22) Date de dépôt: 16.04.2010
(51) Int. Cl.: B64C 27/35, B64C 27/00, B64C 27/32, F16F 7/116

(54) **Dispositif à masses réparties pour réduire les vibrations engendrées par un rotor de sustentation d'un giravion, et moyeu d'un rotor muni d'un tel dispositif**
Vorrichtung mit verteilten Massen zum Reduzieren der Schwingungen, die von einem Auftriebsrotor eines Drehflügelflugzeugs erzeugt werden, und mit einer solchen Vorrichtung ausgestattete Rotornabe
Device with distributed masses for reducing the vibration caused by a lift rotor of a rotorcraft, and hub of a rotor provided with such a device

(30) Priorité: 20.05.2009 FR 0902455
(43) Date de publication de la demande: 24.11.2010
(73) Titulaire: Airbus Helicopters, 13725 Marignane Cedex (FR)
(72) Inventeur: Girard, Vincent, 13770 Venelles (FR)
(74) Mandataire: GPI & Associés

(56) Documents cités:
- WO-A2-2005/079200
- FR-A1- 2 486 906
- US-A- 3 219 120

## Description

La présente invention concerne un dispositif à masses réparties pour réduire les vibrations engendrées par un rotor de sustentation d'un giravion, et le moyeu d'un rotor muni d'un tel dispositif à masses réparties.

En effet, le fonctionnement d'un rotor de sustentation d'un giravion, un rotor principal de sustentation et de propulsion d'un hélicoptère par exemple, engendre des efforts parasites au niveau de la tête de ce rotor de sustentation. Ces efforts parasites induisent alors des vibrations qui se propagent dans le fuselage, ces vibrations étant notamment sensibles au niveau de la cabine de pilotage du giravion.

Pour palier à cet inconvénient, on a réalisé des dispositifs agencés au niveau de la tête du rotor. Conformément à une première solution, on connaît des dispositifs visant à concentrer une masse battante au voisinage de l'axe de rotation du rotor, appelé « dispositif à masse concentrée » par commodité.

Selon le document FR 2416838, on monte sur la partie supérieure du moyeu un premier dispositif à masse concentrée pour réduire lesdites vibrations.

Ce premier dispositif à masse concentrée comporte une masse battante maintenue radialement dans un logement, solidarisé au moyeu, par des moyens élastiques. De plus, cette masse battante est fixée à l'extrémité supérieure d'une tige.

Cette tige est sensiblement disposée selon l'axe de rotation du rotor dans un évidement du mât du rotor. L'extrémité inférieure de la tige est alors articulée en un point situé sur l'axe de rotation du rotor.

Ainsi, les moyens élastiques tendant à maintenir la masse battante dans une position de repos, la masse battante se déplace dans un plan sensiblement parallèle à la partie supérieure du moyeu du rotor de sustentation. La masse battante s'oppose dès lors directement aux vibrations engendrées par le rotor.

Néanmoins, les efforts induisant les vibrations à réduire et générés en tête du rotor peuvent être décrits via un torseur d'efforts, appelé parfois « torseur tête rotor » par l'homme du métier. Ce « torseur tête rotor » est composé de trois moments ainsi que de trois résultantes suivants trois axes orthonormés, à savoir :
- deux axes dénommés par la suite et par commodité
   « premier et deuxième axes résultants » définissant un plan dénommé par la suite « premier plan résultant » parallèle au moyeu du rotor, et
- un axe dénommé « troisième axe résultant » perpendiculaire audit premier plan résultant.

Le premier dispositif à masse concentrée est alors efficace pour filtrer les forces résultantes du « torseur tête rotor » selon les premier et deuxième axes résultants sensiblement parallèles au plan contenant ladite masse battante, mais est inopérant pour la force résultante du « torseur tête rotor » dirigée selon le troisième axe résultant sensiblement parallèle à l'axe de rotation du rotor de sustentation et perpendiculaire au plan contenant la masse battante.

De plus, la masse battante mise en oeuvre étant constante, le premier dispositif à masse concentrée est surtout efficace lorsque la fréquence d'excitations des vibrations à réduire est proche de la fréquence propre, de fait constante, de cette masse.

Le premier dispositif à masse concentrée n'est alors pas vraiment adapté à des fréquences variables.

Pour y remédier, on connaît un deuxième dispositif à masse concentrée par le document FR 2749901.

A l'instar du premier dispositif à masse concentrée, le deuxième dispositif à masse concentrée comporte une masse battante principale maintenue radialement dans un logement. De plus, il est pourvu d'une masse battante de réglage apte à coulisser sur la tige fixée à la masse battante principale et articulée en un point situé sur l'axe de rotation du rotor.

En déplaçant la masse battante de réglage, il devient alors possible d'adapter le deuxième dispositif à masse concentrée afin de lui permettre de réduire des vibrations de fréquences variables.

Néanmoins, l'absence de filtration des forces résultantes du « torseur tête rotor » selon trois axes orthonormés demeure, et notamment selon le troisième axe résultant sensiblement parallèle à l'axe de rotation du rotor de sustentation.

Contrairement à la première solution précitée, une seconde solution vise à répartir des masses battantes autour de cet axe de rotation du rotor de sustentation, par l'intermédiaire de dispositifs dénommés « dispositif à masses réparties » par commodité.

Le document WO 2005/079200, qui est considéré comme l'art antérieur le plus proche et décrit les caractéristiques du préambule de la revendication 1, présente un premier dispositif à masses réparties muni de deux masses coaxiales et d'un moyen de commande, ce moyen de contrôle étant apte à contrôler la vitesse de rotation desdites masses et leurs positions angulaires.

A l'image des premier et deuxième dispositifs à masse concentrée, le premier dispositif à masses réparties ne parait pas suffisant pour contrer les forces résultantes du « torseur tête rotor » selon trois axes orthonormés, plus particulièrement la force résultante selon le troisième axe résultant sensiblement parallèle à l'axe de rotation du rotor de sustentation.

De même, le document FR 2435391 présente un deuxième dispositif à masses réparties muni deux masses fixées à un arbre traversant la manchette reliant une pale au moyeu d'un rotor de sustentation.

Le document FR 2808256 présente un troisième dispositif à masses réparties muni de masses battantes disposées entre les pales.

Chaque masse est alors reliée par une liaison pivotante à un bras d'un support solidaire du moyeu du rotor de manière à constituer un pendule.

Dans ces conditions, le troisième dispositif à masses réparties semble à même de contrer les forces résultantes du « torseur tête rotor » selon trois axes orthonormés.

Par contre, il est particulièrement difficile de régler le troisième dispositif à masses réparties, ce dernier étant soit efficace pour contrer les forces résultantes du « torseur tête rotor » selon les premier et deuxième axes résultants sensiblement parallèles au plan contenant le support des masses, soit efficace pour contrer la force résultante du « torseur tête rotor » selon le troisième axe résultant sensiblement parallèle à l'axe de rotation du rotor de sustentation.

Le document FR 2733483 présente un quatrième dispositif à masses réparties muni d'au moins un corps pendulaire monté sur le rotor afin de pouvoir osciller autour d'un axe de mouvement pendulaire espacé du centre d'inertie du corps pendulaire.

Bien que répondant à certains besoins, les limites mentionnées précédemment semblent perdurer.

Par suite, l'état de la technique prévoit soit des dispositifs aptes à filtrer les forces résultantes du « torseur tête rotor » selon un ou deux axes, soit des dispositifs aptes à filtrer les forces résultantes du « torseur tête rotor » selon trois axes orthonormés mais relativement difficile à régler pour obtenir des résultats performants selon ces trois axes orthonormés.

La présente invention a alors pour objet de proposer un dispositif à masses réparties pour réduire les vibrations engendrées par un rotor de sustentation d'un giravion efficace pour contrer les forces résultantes du « torseur tête rotor » selon ses trois axes orthonormés.

Selon l'invention, un dispositif à masses réparties pour réduire les vibrations engendrées par un rotor de sustentation d'un giravion muni un moyeu, comporte un support apte à être solidaire en rotation autour d'un axe de rotation du rotor de sustentation, ce support étant apte à être fixé au moyeu du rotor de sustentation.

De plus, le dispositif à masses réparties est remarquable en ce qu'il comporte au moins deux masses battantes principales munies chacune d'un évidemment longitudinale traversant, ces masses battantes principales étant réparties autour du support en étant chacune reliée au support par un moyen déformable, les masses battantes principales étant contraintes à se déplacer uniquement dans un plan horizontal par le moyen déformable. Le dispositif à masses réparties est alors muni d'une masse battante secondaire par masse battante principale, chaque masse battante secondaire étant suspendue à l'intérieur de l'évidement de la masse battante principale associée par un moyen élastique de manière à pouvoir se déplacer selon une direction perpendiculaire audit plan horizontal.

Chaque masse battante principale est donc pourvue d'une masse battante secondaire suspendue à l'intérieur de son évidement.

Il est à noter que le plan dans lequel est maintenue chaque masse battante principale est notamment dénommé par commodité plan horizontal dans la mesure où, lorsque le dispositif à masses réparties est agencé sur un rotor de giravion:
- ledit plan est sensiblement horizontal quand le giravion est posé sur le sol,
- ledit plan est perpendiculaire à l'axe de rotation vertical du rotor.

Par suite, les masses battantes principales, et de fait les masses battantes secondaires, sont aptes à se déplacer selon un plan, dénommé « plan horizontal » par commodité dans la mesure ou il est parallèle au premier plan résultant du « torseur tête rotor » et sensiblement perpendiculaire à l'axe de rotation vertical du rotor, pour filtrer les forces résultantes de ce « torseur tête rotor » selon les premier et deuxième axes résultants.

De plus, chaque masse battante secondaire étant suspendue à l'intérieur d'une masse battante principale, chaque masse battante secondaire est apte à se déplacer autour d'une position d'équilibre selon une direction verticale perpendiculaire au plan horizontal dans lequel se déplace chaque masse battante principale autour d'une position au repos. Les masses battantes secondaires filtrent alors la force résultante du « torseur tête rotor » selon un troisième axe résultant.

Par conséquent, le dispositif à masses réparties selon l'invention est aisément réglable puisque seules les masses battantes secondaires ont une action selon ledit axe vertical.

Le dispositif à masses réparties selon l'invention peut en outre comporter une ou plusieurs des caractéristiques additionnelles qui suivent.

Par exemple, les masses battantes principales sont avantageusement réparties de manière équidistante autour du support.

En effet, si le dispositif à masses réparties comporte un nombre restreint de masses battantes principales, inférieur à quatre par exemple, une répartition équidistante permet d'éviter tout balourd intempestif.

Au-delà, des répartitions plus complexes sont envisageables.

Ainsi, le moyen déformable peut posséder une lame déformable par masse battante principale pour relier chaque masse battante principale au support en lui laissant une liberté de mouvement selon un plan horizontal, sensiblement parallèle au premier plan résultant du « torseur tête rotor » et au moyeu lorsque le dispositif à masses réparties est agencé sur un rotor de sustentation.

Selon un premier mode de réalisation, le moyen déformable comporte une unique lame déformable par masse battante principale. Chaque masse battante principale étant alors fixée au support via une unique lame déformable, chaque masse battante décrit un mouvement circulaire autour d'une position au repos.

Selon un deuxième mode de réalisation, le moyen déformable comporte au moins deux lames déformables par masse battante principale pour représenter un parallélogramme déformable reliant chaque masse battante principale audit support. Chaque masse battante principale étant alors fixée au support via au moins deux lames déformables, avantageusement parallèles entre elles, chaque masse battante principale décrit non pas un mouvement circulaire mais une translation circulaire autour d'une position au repos.

On rappelle qu'une translation circulaire d'un corps est un mouvement de ce corps dans un plan, deux points distincts dudit corps décrivant deux trajectoires circulaires de même rayon mais de centres différents.

Indépendamment du mode de réalisation, chaque lame déformable s'étend radialement à partir du support pour être fixée à la masse battante principale associée, les lames déformables ayant éventuellement toutes la même longueur.

Par ailleurs, pour garantir le déplacement des masses battantes secondaires selon des directions verticales, parallèles à l'axe de rotation du rotor et du moyeu du giravion équipé de l'invention, le dispositif à masses réparties comporte un moyen de guidage par masse battante secondaire pour guider, avec un faible jeu et de faibles frottements, la translation d'une masse battante secondaire par rapport à la masse principale associée selon une direction verticale.

Par exemple, le moyen de guidage est une douille à billes agencée entre la masse battante principale et la masse battante secondaire associée. On se rapportera à la littérature pour obtenir plus d'informations concernant les douilles à billes.

A titre de variante, il est possible d'utiliser comme moyen de guidage une bague recouverte d'un matériau autolubrifiant par exemple du Téflon® ou réalisée dans un matériau connu pour son faible coefficient de frottement tel que du bronze.

En outre, chaque moyen élastique comporte optionnellement un premier et un deuxième ressorts. Chaque masse battante secondaire peut alors être agencée à l'intérieur de la masse battante principale associée entre les premier et deuxième ressorts du moyen élastique correspondant.

Dès lors, les premier et deuxième ressorts sont avantageusement respectivement précontraints entre :
- la masse battante secondaire et un premier moyen d'obturation de l'évidement de la masse battante principale associée,
- la masse battante secondaire et un deuxième moyen d'obturation de l'évidement de la masse battante principale associée.

Selon une direction verticale, on trouve alors successivement un premier moyen d'obturation, un premier ressort, une masse battante secondaire, un deuxième ressort et un deuxième moyen d'obturation.

Par suite, il est favorable mais non obligatoire qu'une première extrémité d'un premier ressort soit solidarisée à la masse battante secondaire associée, et qu'une première extrémité du deuxième ressort soit solidarisée à cette même masse battante secondaire associée.

Enfin, une masse battante principale et la masse battante secondaire associée sont éventuellement cylindriques.

Outre un dispositif à masses réparties pour réduire les vibrations engendrées par un rotor de sustentation, l'invention a pour objet un moyeu d'un rotor de sustentation de giravion muni d'une partie inférieure apte à être solidarisée à un mât rotor de giravion.

Un tel moyeu est alors remarquable en ce qu'il comporte une partie supérieure, sensiblement parallèle à sa partie inférieure, solidaire en rotation du support d'un dispositif à masses réparties selon l'invention.

L'invention et ses avantages apparaîtront avec plus de détails dans le cadre de la description qui suit avec des exemples de réalisation donnés à titre illustratif en référence aux figures annexées qui représentent :
- la figure 1, un schéma présentant un dispositif à masses réparties selon un premier mode de réalisation, et
- la figure 2, un schéma présentant un dispositif à masses réparties selon un deuxième mode de réalisation agencé sur un moyeu de rotor.

Les éléments présents dans plusieurs figures distinctes sont affectés d'une seule et même référence.

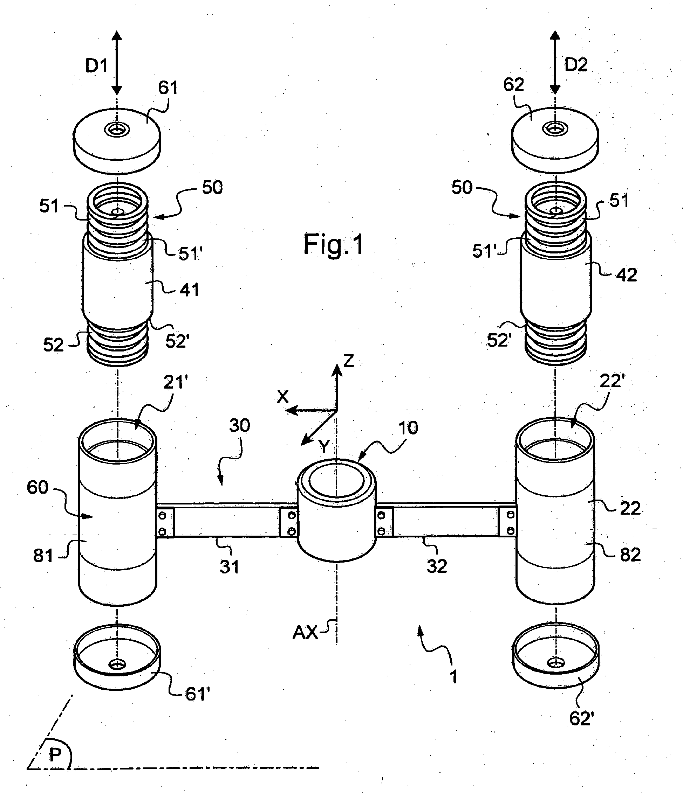

On note que trois axes X, Y et Z orthogonaux les uns par rapport aux autres sont représentés sur la figure 1, les forces résultantes d'un « torseur tête rotor » étant dirigées parallèlement à ces trois axes.

Les axes X et Y sont dénommés respectivement « premier axe horizontal » et « deuxième axe horizontal ». Les premier et deuxième axes horizontaux définissent conjointement un plan horizontal P.

A contrario, l'axe Z est dit « axe vertical ». Cet axe vertical Z est alors perpendiculaire au plan horizontal P.

La figure 1 présente un schéma montrant un dispositif à masses réparties 1 selon un premier mode de réalisation.

Indépendamment du mode de réalisation, ce dispositif à masses réparties 1 comporte un support 10, de forme cylindrique sur les figures bien que cette forme ne soit pas impérative. Le support 10 s'étend verticalement selon un axe destiné à être confondu avec l'axe de rotation AX du rotor devant accueillir le dispositif à masses réparties 1.

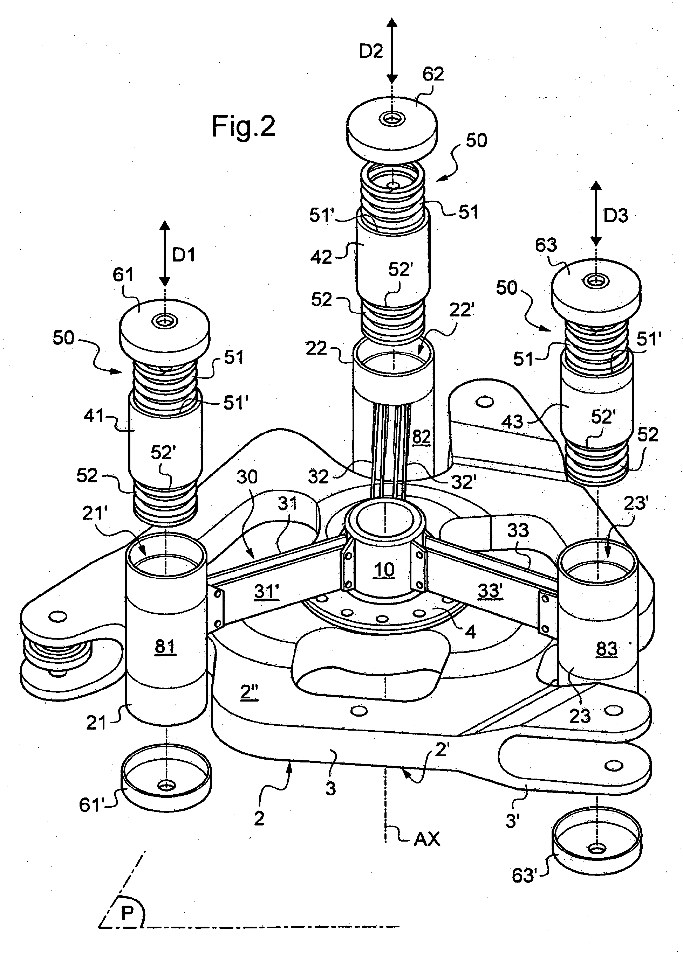

De plus, ce dispositif à masses réparties 1 est pourvu d'au moins deux masses battantes principales 21. Ainsi, sur l'exemple représenté sur la figure 1, le dispositif à masses réparties 1 est muni de deux masses battantes principales 21, 22, chaque masse battante principale 21,22 étant reliée au support 10 via un moyen déformable 30. Au contraire, la variante représentée sur la figure 2 possède trois masses battantes principales 21, 22, 23, chaque masse battante principale 21, 22, 23 étant reliée au support 10 via un moyen déformable 30.

Dès lors, sous l'effet des efforts générés par le rotor de sustentations équipé du dispositif à masses réparties 1, les masses battantes principales 21, 22 sont contraintes par les moyens déformables 30 à sa déplacer dans le plan horizontal P, destiné à être parallèle au moyeu du rotor de sustentation et perpendiculaire à l'axe de rotation AX de ce rotor de sustentation.

Ce mouvement des masses battantes principales dans le plan horizontal P permet de filtrer les forces résultantes du « torseur tête rotor » selon les premier et deuxième axes résultants.

De plus, en référence aux figures 1 et 2, pour filtrer la résultante du « torseur tête rotor » selon le troisième axe résultant et indépendamment du mode de réalisation, le dispositif à masses réparties 1 comporte une masse battante secondaire 41, 42, 43 par masse battante principale 21, 22, 23.

Par suite, chaque masse battante principale 21, 22, 23 possède un évidement 21', 22', 23' traversant longitudinalement la masse battante principale 21, 22, 23, de part en part par exemple. Ainsi, les masses battantes principales 21, 22, 23 sont par exemple des cylindres creux. Une masse battante secondaire 41, 42, 43 est alors suspendue à l'intérieur de l'évidement 21', 22', 23' par un moyen élastique 50 afin de pouvoir se déplacer selon une direction verticale D1, D2, D3 parallèle à l'axe de rotation d'un rotor de sustentation et donc perpendiculaire au plan horizontal P.

Avantageusement, chaque moyen élastique 50 est muni d'un premier et d'un deuxième ressorts 51, 52 qui enserrent une masse battante secondaire 41, 42, 43 à l'intérieur d'un évidement 21', 22', 23' d'une masse battante principale 21, 22, 23.

Plus précisément, la première extrémité 51' d'un premier ressort 51 est apposée contre une face supérieure d'une masse battante secondaire 41, 42, 43, alors que la deuxième extrémité de ce premier ressort 51 vient en butée contre un premier moyen d'obturation 61, 62, 63 de l'évidement 21', 22', 23' de la masse battante principale associée 21, 22, 23. De même, la première extrémité 52' d'un deuxième ressort 52 est apposée contre à une face inférieure d'une masse battante secondaire 41, 42, 43, alors que la deuxième extrémité de ce deuxième ressort 52 vient en butée contre un deuxième moyen d'obturation 61', 62', 63' de l'évidement 21', 22', 23' de la masse battante principale associée 21, 22, 23.

Ainsi, chaque ressort est précontraint entre la masse secondaire et un moyen d'obturation, sans être fixé à la masse battante secondaire. La précontrainte est ajustée pour s'assurer qu'il n'y a pas une perte de contact entre un ressort et la masse battante secondaire quand cette masse battante secondaire se trouve dans une position extrême.

On note que les premier et deuxième moyens d'obturation 61, 62, 63, 61', 62', 63', des couvercles, sont fixés à la masse battante principale associée par des moyens usuels, en étant vissés à cette masse battante principale par exemple.

Afin que le mouvement des masses battantes secondaires 41, 42, 43 à l'intérieur des masses battantes principales ne soit pas entravé par des frottements, le dispositif à masses réparties 1 selon l'invention comprend avantageusement un moyen de guidage 60.

Par exemple, le moyen de guidage 60 est constitué d'une douille à billes 81, 82, 83 par masse battante principale 21, 22, 23, chaque douille à billes étant fixée à l'intérieure d'un évidement 21', 22', 23' entre une masse battante principale 21, 22, 23 et la masse battante secondaire 41, 42, 43 associée.

La translation de chaque masse battante secondaire 41, 42, 43 selon une direction verticale D1, D2, D3 est alors garantie.

Enfin, on note sur les figures 1 et 2 que les masses battantes principales 21, 22, 23 se trouvent à égale distance du support 10 et sont réparties autour de ce support 10 de manière équidistante.

De plus, les masses battantes principales 21, 22, 23 d'un dispositif à masses réparties 1 sont identiques et de forme cylindrique.

Il en va de même pour les masses battantes secondaires 41, 42, 43 qui :
- se trouvent à égale distance du support 10,
- sont réparties autour de ce support 10 de manière équidistante,
- sont identiques, et
- ont une forme cylindrique.

Selon le premier mode de réalisation présenté sur la figure 1, le moyen déformable comporte un lame déformable 31, 32 par masse battante principale 21, 22.

Une première lame déformable 31 est alors fixée au support 10 par des moyens usuels, en étant fixée par des vis à des joues d'une chape du support 10 par exemple. La première lame déformable 31 s'étend alors radialement dans le plan horizontal P pour être fixée à une première masse battante principale 21 par des moyens usuels, via des vis à des joues d'une chape de la première masse battante principale 21 par exemple.

De même, une deuxième lame déformable 32 est fixée au support 10 par des moyens usuels, puis s'étend radialement dans le plan horizontal P pour être fixée à une deuxième masse battante principale 22 par des moyens usuels.

Les masses battantes principales, et de fait les masses battantes secondaires associées, sont alors à même de réaliser un mouvement circulaire dans le plan horizontal P.

En référence à la figure 2, selon un deuxième mode de réalisation, le moyen déformable comporte deux lames déformables par masse battante principale.

Ainsi, une première lame déformable primaire 31 et une première lame déformable secondaire 31' sont fixées au support 10 par des moyens usuels, puis s'étendent radialement dans le plan horizontal P pour être fixée à une première masse battante principale 21 par des moyens usuels.

Les premières lames déformables primaire 31 et secondaire 31' sont sensiblement parallèles entre elles dans une position au repos.

L'ensemble comportant les premières lames déformables primaire 31 et secondaire 31' ainsi que le support 10 et la première masse battante principale 21 forme alors un parallélogramme déformable. Par suite, la première masse battante principale 21, et de fait la première masse battante secondaire 41 associée, est apte à effectuer une translation circulaire dans le plan horizontal P.

La variante du deuxième mode de réalisation représentée sur la figure 2 ayant trois masses battantes principales 21, 22, 23, le moyen déformable comporte en outre :
- une deuxième lame déformable primaire 32 et une deuxième lame déformable secondaire 32' fixées au support 10 par des moyens usuels qui s'étendent radialement dans le plan horizontal P pour être fixée à une deuxième masse battante principale 22 par des moyens usuels, et
- une troisième lame déformable primaire 33 et une troisième lame déformable secondaire 33' fixées au support 10 par des moyens usuels qui s'étendent radialement dans le plan horizontal P pour être fixée à une troisième masse battante principale 23 par des moyens usuels,

Enfin, la figure 2 montre aussi un moyeu 2 muni d'une pluralité de bras 3 aptes à accueillir une pale de giravion, chaque bras 3 comportant un déport 3' permettant de fixer un amortisseur par exemple.

Le moyeu 2 comportant une partie inférieure 2' apte à être fixée au mât d'un rotor, et une partie supérieure 2", le support 10 d'un dispositif à masses réparties 1 selon l'invention est fixé à la partie supérieure 2" par un moyen de liaison 4 autour d'un axe de rotation AX du moyeu 2.

Dès lors, le support 10 est solidaire en rotation du moyeu 2 autour de son axe de rotation AX.

De plus, on note que chaque masse battante principale est agencée dans un espace vide séparant le déport 3' d'un bras 3 adjacent.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Par exemple, il est concevable de prévoir un moyen déformable muni d'au moins trois lames déformables. Dans ce cas la trajectoire de chaque masse répartie est une translation circulaire à l'instar d'une variante à deux lames déformables. Par suite, il faut ajuster la raideur de chaque lame déformable 30 à la valeur de chaque masse battante principale pour conserver les caractéristiques de résonance recherchées.

De plus, pour adapter au mieux chaque masse battante principale ou secondaire aux caractéristiques de résonance recherchées, chaque masse battante principale et/ou chaque masse battante secondaire peuvent être équipées d'un moyen de réglage de leur masse respective, par exemple par la fixation d'éléments pesants additionnels à l'aide de moyens usuels.

## Revendications

1. Dispositif à masses réparties (1) pour réduire les vibrations engendrées par un rotor de sustentation d'un giravion muni un moyeu (2), ledit dispositif à masses réparties (1) comportant un support (10) apte à être solidaire en rotation autour d'un axe de rotation (AX) dudit rotor de sustentation,
**caractérisé en ce que**, ledit dispositif à masses réparties (1) comporte au moins deux masses battantes principales (21, 22, 23) munies chacune d'un évidement (21', 22', 23') longitudinale traversant, lesdites masses battantes principales (21, 22, 23) étant réparties autour dudit support (10) en étant chacune reliée au support (10) par un moyen déformable (30), les masses battantes principales (21, 22, 23) étant contraintes à se déplacer uniquement dans un plan horizontal (P) par ledit moyen déformable (30), chaque masse battante principale (21, 22, 23) étant munie d'une masse battante secondaire (41, 42, 43) suspendue à l'intérieur de l'évidement (21', 22', 23') de la masse battante principale associée (21, 22, 23) par un moyen élastique (50) de manière à pouvoir se déplacer selon une direction perpendiculaire audit plan horizontal (P).

2. Dispositif à masses réparties selon la revendication 1, **caractérisé en ce que** les masses battantes principales sont réparties de manière équidistantes autour du support.

3. Dispositif à masses réparties selon l'une quelconque des revendications précédentes,
**caractérisé en ce que**, ledit moyen déformable (30) comporte une lame déformable (31, 31', 32, 32', 33, 33') par masse battante principale (21, 22, 23) pour relier chaque masse battante principale (21, 22, 23) audit support (10).

4. Dispositif à masses réparties selon l'une quelconque des revendications 1 à 2,
**caractérisé en ce que** ledit moyen déformable (30) comporte au moins deux lames déformables (31-31', 32-32', 33-33') par masse battante principale (21, 22, 23) pour représenter un parallélogramme déformable reliant chaque masse battante principale (21, 22, 23) audit support (10).

5. Dispositif à masses réparties selon l'une quelconque des revendications 3 à 4,
**caractérisé en ce que** chaque lame déformable (31, 31', 32, 32', 33, 33') s'étend radialement à partir dudit support (10) pour être fixée à la masse battante principale associée (21, 22, 23).

6. Dispositif à masses réparties selon l'une quelconque des revendications précédentes,
**caractérisé en ce qu'**il comporte un moyen de guidage par masse battante secondaire (41, 42, 43) pour guider la translation d'une masse battante secondaire (41, 42, 43) par rapport à la masse battante principale (21, 22, 23) associée.

7. Dispositif à masses réparties selon la revendications 6,
**caractérisé en ce que** ledit moyen de guidage est une douille à billes (81, 82, 83) agencée entre la masse battante principale (21, 22, 23) et la masse battante secondaire (41, 42, 43) associée.

8. Dispositif à masses réparties selon la revendication 6,
**caractérisé en ce que** ledit moyen de guidage est une bague recouverte d'un matériau autolubrifiant.

9. Dispositif à masses réparties selon l'une quelconque des revendications précédentes,
**caractérisé en ce que**, chaque moyen élastique (50) comportant un premier et un deuxième ressorts (51, 52), chaque masse battante secondaire (41, 42, 43) est agencé à l'intérieur de la masse battante principale (21, 22, 23) associée entre les premier et deuxième ressorts (51, 52) du moyen élastique (50) correspondant.

10. Dispositif à masses réparties selon la revendication 9,
**caractérisé en ce que** lesdits premier et deuxième ressorts (51, 52) sont respectivement précontraints entre :
- la masse battante secondaire (41, 42, 43) et un premier moyen d'obturation (61, 62, 63) de l'évidement de la masse battante principale (21, 22, 23) associée,
- la masse battante secondaire (41, 42, 43) et un deuxième moyen d'obturation (61', 62', 63') de l'évidement de la masse battante principale (21, 22, 23) associée.

11. Dispositif à masses réparties selon l'une quelconque des revendications précédentes,
**caractérisé en ce qu'**une masse battante principale (21, 22, 23) et la masse battante secondaire (41, 42, 43) associée sont cylindriques.

12. Système comprenant un moyeu (2) d'un rotor de sustentation de giravion et du dispositif à masses réparties (1) selon l'une quelconque des revendications précédentes, le moyen étant muni d'une partie inférieure (2') apte à être solidarisée à un mât rotor de giravion,
**caractérisé en ce qu'**il comporte une partie supérieure (2"), sensiblement parallèle à ladite partie inférieure (2'), solidaire en rotation du support (10) du dispositif à masses réparties.

## Patentansprüche

1. Vorrichtung (1) mit verteilten Massen zum Reduzieren der Schwingungen, die von einem Auftriebsrotor eines Drehflügelflugzeugs, der mit einer Nabe (2) versehen ist, erzeugt werden, wobei die Vorrichtung (1) mit verteilten Massen einen Träger (10) aufweist, der drehfest mit einer Drehwelle (AX) des Auftriebsrotors verbunden sein kann,
**dadurch gekennzeichnet, dass** die Vorrichtung (1) mit verteilten Massen mindestens zwei Haupt-Schwingmassen (21, 22, 23) aufweist, die jeweils mit einer durchgehenden Längsausnehmung (21', 22', 23') versehen sind, wobei die Haupt-Schwingmassen (21, 22, 23) um den Träger (10) verteilt sind, indem sie jeweils mit dem Träger (10) über ein verformbares Mittel (30) verbunden sind, wobei die Haupt-Schwingmassen (21, 22, 23) durch das verformbare Mittel (30) so beschränkt werden, dass sie sich nur in einer horizontalen Ebene (P) bewegen können, wobei jede Haupt-Schwingmasse (21, 22, 23) mit einer Neben-Schwingmasse (41, 42, 43) versehen ist, die im Inneren der Ausnehmung (21', 22', 23') der zugehörigen Haupt-Schwingmasse (21, 22, 23) mit einem elastischen Mittel (50) aufgehängt ist, derart, dass sie sich in einer Richtung senkrecht zu der Horizontalebene (P) bewegen kann.

2. Vorrichtung mit verteilten Massen nach Anspruch 1,
**dadurch gekennzeichnet, dass** die Haupt-Schwingmassen mit gleichen Abständen um den Träger herum verteilt sind.

3. Vorrichtung mit verteilten Massen nach einem der vorstehenden Ansprüche,
**dadurch gekennzeichnet, dass** das verformbare Mittel (30) ein verformbares Band (31, 31', 32, 32', 33, 33') pro Haupt-Schwingmasse (21, 22, 23) aufweist, um jede Haupt-Schwingmasse (21, 22, 23) mit dem Träger (10) zu verbinden.

4. Vorrichtung mit verteilten Massen nach einem der Ansprüche 1 bis 2,
**dadurch gekennzeichnet, dass** das verformbare Mittel (30) mindestens zwei verformbare Bänder (31-31', 32-32', 33-33') pro Haupt-Schwingmasse (21, 22, 23) aufweist, um ein verformbares Parallelogramm zu bilden, das jede Haupt-Schwingmasse (21, 22, 23) mit dem Träger (10) verbindet.

5. Vorrichtung mit verteilten Massen nach einem der Ansprüche 3 bis 4,
**dadurch gekennzeichnet, dass** jedes verformbare Band (31, 31', 32, 32', 33, 33') sich radial ausgehend von dem Träger (10) erstreckt, um an der zugehörigen Haupt-Schwingmasse (21, 22, 23) befestigt zu werden.

6. Vorrichtung mit verteilten Massen nach einem der vorstehenden Ansprüche,
**dadurch gekennzeichnet, dass** sie ein Führungsmittel pro Neben-Schwingmasse (41, 42, 43) aufweist, um die gradlinige Bewegung einer Nebenschwingmasse (41, 42, 43) relativ zu der zugehörigen Haupt-Schwingmasse (21, 22, 23) zu führen.

7. Vorrichtung mit verteilten Massen nach Anspruch 6,
**dadurch gekennzeichnet, dass** das Führungsmittel eine Kugelführungsbuchse (81, 82, 83) ist, die zwischen der Haupt-Schwingmasse (21, 22, 23) und der zugehörigen Neben-Schwingmasse (41, 42, 43) angeordnet ist.

8. Vorrichtung mit verteilten Massen nach Anspruch 6,
**dadurch gekennzeichnet, dass** das Führungsmittel ein mit einem selbstschmierenden Material beschichteter Ring ist.

9. Vorrichtung mit verteilten Massen nach einem der vorstehenden Ansprüche,
**dadurch gekennzeichnet, dass** jedes elastische Mittel (50) eine erste und eine zweite Feder (51, 52) aufweist, wobei jede Neben-Schwingmasse (41, 42, 43) im Inneren der zugehörigen Haupt-Schwingmasse (21, 22, 23) zwischen der ersten und der zweiten Feder (51, 52) des entsprechenden elastischen Mittels (50) angeordnet ist.

10. Vorrichtung mit verteilten Massen nach Anspruch 9,
**dadurch gekennzeichnet, dass** die erste und die zweite Feder (51, 52) jeweils vorgespannt sind zwischen:
- der Neben-Schwingmasse (41, 42, 43) und einem ersten Verschlussmittel (61, 62, 63) der Ausnehmung der zugehörigen Haupt-Schwingmasse (21, 22, 23),
- der Neben-Schwingmasse (41, 42, 43) und einem zweiten Verschlussmittel (61', 62', 63') der Ausnehmung der zugehörigen Haupt-Schwingmasse (21, 22, 23).

11. Vorrichtung mit verteilten Massen nach einem der vorstehenden Ansprüche,
**dadurch gekennzeichnet, dass** eine Haupt-Schwingmasse (21, 22, 23) und die zugehörige Neben-Schwingmasse (41, 42, 43) zylinderförmig sind.

12. System mit einer Nabe (2) eines Auftriebsrotors eines Drehflügelflugzeugs und eine Vorrichtung (1) mit verteilten Massen nach einem der vorstehenden Ansprüche, wobei die Nabe einen inneren Teil (2') aufweist, der mit einer Rotorwelle des Drehflügelflugzeugs fest verbunden werden kann,
**dadurch gekennzeichnet, dass** es einen oberen Teil (2") aufweist, der im Wesentlichen parallel zu dem unteren Teil (2') ist, der drehfest mit dem Träger (10) der Vorrichtung mit verteilten Massen verbunden ist.

## Claims

1. Distributed-mass device (1) for reducing the vibrations generated by a rotorcraft lift rotor provided with a hub (2), said distributed-mass device (1) comprising a support (10) suitable for being integral in rotation about an axis of rotation (AX) of said lift rotor,
**characterised in that** said distributed-mass device (1) comprises at least two main oscillating masses (21, 22, 23) each provided with a through longitudinal opening (21', 22', 23'), said main oscillating masses (21, 22, 23) being distributed around said support (10), each being connected to the support (10) by a deformable means (30), the main oscillating masses (21, 22, 23) being constrained to move solely in a horizontal plane (P) by said deformable means (30), each main oscillating mass (21, 22, 23) being provided with a secondary oscillating mass (41, 42, 43) suspended inside the opening (21', 22', 23') of the associated main oscillating mass (21, 22, 23) by an elastic means (50) so as to be capable of moving along a direction perpendicular to said horizontal plane (P).

2. Distributed-mass device according to claim 1,
**characterised in that** the main oscillating masses are distributed in equidistant manner around the support.

3. Distributed-mass device according to any one of the preceding claims,
**characterised in that** said deformable means (30) comprises one deformable strip (31, 31', 32, 32', 33, 33') per main oscillating mass (21, 22, 23) to connect each main oscillating mass (21, 22, 23) to said support (10).

4. Distributed-mass device according to any one of claims 1 to 2,
**characterised in that** said deformable means (30) comprises at least two deformable strips (31-31', 32-32', 33-33') per main oscillating mass (21, 22, 23) to represent a deformable parallelogram connecting each main oscillating mass (21, 22, 23) to said support (10).

5. Distributed-mass device according to any one of claims 3 to 4,
**characterised in that** each deformable blade (31, 31', 32, 32', 33, 33') extends radially from said support (10) to be fastened to the associated main oscillating mass (21, 22, 23).

6. Distributed-mass device according to any one of the preceding claims,
**characterised in that** it comprises one guide means per secondary oscillating mass (41, 42, 43) to guide the translation of a secondary oscillating mass (41, 42, 43) relative to the associated main oscillating mass (21, 22, 23).

7. Distributed-mass device according to claim 6,
**characterised in that** said guide means is a ball bushing (81, 82, 83) arranged between the main oscillating mass (21, 22, 23) and the associated secondary oscillating mass (41, 42, 43).

8. Distributed-mass device according to claim 6,
**characterised in that** said guide means is a ring covered by a self-lubricating material.

9. Distributed-mass device according to any one of the preceding claims,
**characterised in that** each elastic means (50) comprises a first and a second spring (51, 52), and each secondary oscillating mass (41, 42, 43) is arranged inside the associated main oscillating mass (21, 22, 23) between the first and second springs (51, 52) of the corresponding elastic means (50).

10. Distributed-mass device according to claim 9,
**characterised in that** said first and second springs (51, 52) are respectively prestressed between:
- the secondary oscillating mass (41, 42, 43) and a first closure means (61, 62, 63) for closing the opening of the associated main oscillating mass (21, 22, 23),
- the secondary oscillating mass (41, 42, 43) and a second closure means (61', 62', 63`) for closing the opening of the associated main oscillating mass (21, 22, 23).

11. Distributed-mass device according to any one of the preceding claims,
**characterised in that** a main oscillating mass (21, 22, 23) and the associated secondary oscillating mass (41, 42, 43) are cylindrical.

12. System comprising a hub (2) of a rotorcraft lift rotor and a distributed-mass device (1) according to any one of the preceding claims, the means being provided with a lower part (2') suitable for being secured to a rotorcraft rotor mast,
**characterised in that** it comprises an upper part (2") substantially parallel to said lower part (2'), integral in rotation with the support (10) of the distributed-mass device.
